Europäisches Patentamt

European Patent Office

Office européen des brevets

(19)

(11) Publication number: **0 285 458**
**A2**

# EUROPEAN PATENT APPLICATION

(12)

(21) Application number: 88303005.8

(22) Date of filing: 05.04.88

(51) Int. Cl.⁴: **C 22 B 7/02**

(30) Priority: 02.04.87 NO 871369

(43) Date of publication of application:
05.10.88 Bulletin 88/40

(84) Designated Contracting States:
AT BE DE ES FR GB IT LU NL SE

(71) Applicant: Elkem A/S
Middelthunsgt 27 P.O. Box 5430 Majorstua
Oslo 3 (NO)

(72) Inventor: Aune, Jan Arthur
Oppegardsveien 207
N-1405 Langhus (NO)

Pedersen, Thor
Ostadalsveien 50
N-0753 Oslo 7 (NO)

(74) Representative: Rees, David Christopher et al
Kilburn & Strode 30 John Street
London WC1N 2DD (GB)

(54) Method of treating dust in metallurgical process waste gases.

(57) A method of treating dust precipitated from waste gases from metallurgical processes in particular dust precipitated from waste gases in connection with the production of steel, in order to transfer the dust to a form in which it can be deposited without danger of environmental pollution and from which the valuable components of the dust can be recovered. According to the method, the dust is treated in the following steps: continuous supply of dust together with reducing agent and fluxes to a gastight covered electrothermic smelting furnace (1); smelting and selective reduction together with volatilisation of volatile metals in the smelting furnace (1); continuous or intermittent tapping of an inert slag phase (12) and a liquid metal phase (13) from the smelting furnace; continuous removal from the smelting furnace of a gas phase (8) containing chiefly CO-gas, metal fumes, sulphur, chlorides and fluorides together with entrained unreacted dust; optional selective condensation (10) of one or more meals from the metal fumes in he waste gas from the smelting furnace; controlled after burning (6) of oxydisable components in the waste gas; removal of dust (8) from the waste gas; and final purification and neutralisation (9) of the waste gas.

FIGURE 2

EP 0 285 458 A2

**Description**

METHOD OF TREATING DUST IN METALLURGICAL PROCESS WASTE GASES

The present invention relates to a method for treating dust. It is particularly, though not exclusively, concerned with the treatment of dust which has been precipitated from the waste gases from metallurgical processes, especially dust precipitated from waste gases in connection with the production of steel, in order to convert the dust to such a form that it can be deposited without any risk of pollution of the environment and from which the valuable components of the dust can be recovered.

During the production of steel in electric smelting furnaces, and during the subsequent oxygen refining of the steel, there are formed large amounts of dust which follow the waste gases from the smelting furnaces or the convertors. This dust is precipitated from the waste gases in filter systems, for instance, bag filters or other known filter systems. This dust (which below is called EAF dust, an abbreviation for Electric Arc Furnace Dust) consists mainly of agglomerates of very small and chemically complex particles. The size of the primary particles is usually within the range 0.1 to 10 um. The EAF dust comprises complex oxides containing elements evolved during the smelting and refining steps, for example, iron, zinc, lead, cadmium, chromium, manganese, nickel, copper, molybdenum and other components which are present in scrap iron.

Table 1 illustrates the chemical analysis of EAF dust from four different steel producers. The chemical analysis of the EAF dust indicates that the composition of the dust is directly influenced by the scrap iron which is used, and by those alloying additions which are added to the steel smelter. No direct connection between the chemical composition of the EAF dust and the furnace size filter system or other factors is found.

## TABLE I

### Composition of EAF dust in % of weight

| | Dust A | Dust B | Dust C | Dust D |
|---|---|---|---|---|
| $Fe_2O_3$ | 45.0 | 56.1 | 43.0 | 53.5 |
| ZnO | 28.3 | 13.2 | 18.4 | 13.1 |
| CdO | 0.12 | 0.03 | 0.01 | 0.01 |
| AgO | 0.01 | -.-- | -.--- | -.--- |
| $MoO_3$ | 0.09 | 0.09 | 0.09 | 0.09 |
| PbO | 3.39 | 1.36 | 2.23 | 1.51 |
| $As_2O_3$ | 0.01 | -.-- | 0.01 | 0.006 |
| $Cr_2O_3$ | 0.16 | 0.22 | 0.18 | 0.19 |
| $V_2O_5$ | 0.02 | 0.04 | 0.03 | 0.04 |
| $TiO_2$ | 0.04 | 0.09 | 0.08 | 0.08 |
| BaO | -.-- | 0.03 | -.-- | -.-- |
| CaO | 4.81 | 10.42 | 15.19 | 10.14 |
| $Sb_2O_3$ | 0.03 | 0.01 | -.-- | 0.01 |
| $SiO_2$ | 3.0 | 3.3 | 2.0 | 2.1 |
| $SO_4$ | 1.52 | 1.18 | 2.12 | 2.14 |
| Cl | 1.94 | 1.44 | 0.21 | 1.31 |
| $Na_2O$ | 2.21 | 1.25 | 3.41 | 2.76 |
| MgO | 3.31 | 2.50 | 2.80 | 3.42 |
| F | 0.19 | 1.39 | 0.55 | 0.46 |
| CuO | 0.37 | 0.18 | 0.17 | 0.23 |
| NiO | 0.04 | 0.03 | 0.02 | 0.03 |
| CoO | 0.03 | 0.03 | 0.02 | 0.03 |
| MnO | 4.72 | 6.33 | 4.33 | 5.08 |
| $SnO_2$ | 0.05 | 0.10 | 0.03 | 0.04 |
| $K_2O$ | 1.4 | 0.6 | 1.3 | 1.3 |
| $P_2O_5$ | 0.17 | 0.24 | 0.17 | 0.20 |
| $Al_2O_3$ | 0.45 | 0.86 | 0.38 | 0.31 |
| Total: | 101.38 | 101.02 | 97.25 | 98.08 |

Some of the elements which are usually present in EAF dust are leachable for example lead, cadmium, chromium and arsenic. Due to the deposition of EAF dust in landfills, these elements may in the course of time be leached from the dust which can result in serious pollution of the environment. It is for this reason that some countries have very strict requirements as to deposition of EAF dust, and it will in the future not be permitted to deposit the dust in the form in which precipitated.

A number of different methods for converting the EAF dust to a form in which it can be deposited without any danger of environmental pollution have been suggested. In some of these processes it is possible to transform the EAF dust to a non-hazardous waste product and simultaneously recover the metals contained in the dust. Plasmasmelting is an example of such a process. These known processes however may not be practical for economical reasons.

It is therefore an object of the present invention to provide a method for treatment of the dust in question which makes it possible in a simple, reliable and economically advantageous way to produce a waste product which can be deposited without any risk of pollution of the environment and which allows recovery of valuable components.

According to the present invention, there is provided a method for treating dust precipitated from waste gases from metallurgical processes, which comprises: supplying the dust together with reducing agent and optionally a flux or fluxes substantially continuously to a gastight covered electrothermic smelting furnace; smelting and selectively reducing metal containing compounds and volatilising volatile metals in the smelting furnace; continuously or intermittently tapping an inert slag phase and optionally a liquid metal phase from the smelting furnace; continuously removing from the smelting furnace a gas phase containing chiefly CO-gas, metal fumes, sulphur, chlorides and fluorides together with entrained unreacted dust; optionally selectively condensing one or more metals from the metal fumes in the waste gas from the smelting furnace; removing dust from the waste gas; and optionally finally purifying and neutralising the waste gas.

One preferred method includes the step of conducting a controlled after burning of oxydisable components in the waste gas. In such a case, the dust may be removed by dry-filtering, for instance, in filter bags. The dust may be recycled to the smelting furnace.

Alternatively, the dust may be removed in a wet-cleaning process. In such a case, the dust may be removed as a sludge which may be dried and recycled to the smelting furnace.

Preferably $SiO_2$ sand is added as a flux in the first step.

The amount of flux which is added should be adjusted so that the actual smelting temperature obtained results in a satisfactorily low viscosity for the produced slag, so that the slag can be tapped from the smelting furnace, and when it is cooled, shows a microstructure which results in non-leachability.

As the composition of those types of dust which can be treated by the process of the invention will vary considerably, the amount of flux required will also vary. The amount of flux to be added must therefore be determined for the different types of dust on the basis of phase diagrams and leaching tests carried out with the produced slag.

Preferably, the dust, reducing agent and possible fluxes are added to the smelting furnace in the form of agglomerates, for instance, as pellets or briquettes.

The temperature in the smelting furnace is preferably maintained within the range 1250 to 1750°C and more preferably within the range 1300 to 1400°C.

Preferably, zinc is recovered from the off gases from the furnace by selective condensation in a zinc condenser with lead or zinc as a condensing medium.

The neutralisation of the gases can be carried out in wet scrubbers with simultaneous removal of sulphur, fluorine and chlorine components from the waste gas.

In order to obtain greater effectiveness from the process, other waste materials containing recoverable values, such as components containing volatile metals, may be mixed with the EAF dust. In this way, waste or off-grade zinc oxide can be added to the EAF dust and the zinc oxide will be reduced to metallic zinc in the zinc condenser.

The invention may be carried into practice in various ways and two specific methods will now be described, by way of example, with reference to the accompanying drawings in which:

Figure 1 is a flow diagram illustrating one method in accordance with the present invention;

Figure 2 is a flow diagram illustrating a second method in accordance with the present invention; and

Figures 3 and 4 are flow diagrammes similar to Figures 1 and 2 showing two further embodiments in which the waste gases are subjected to a wet-cleaning process.

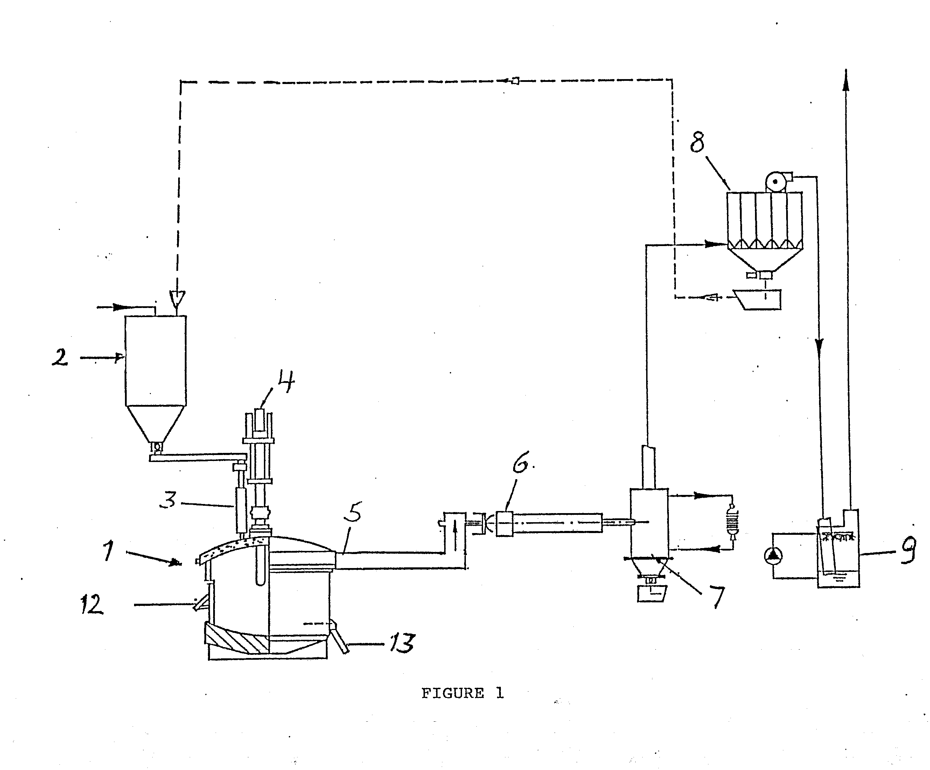

According to the embodiment which is shown in Figure 1, EAF dust reducing agent in the form of coke or coal and $SiO_2$-sand is supplied to a gastight covered electrothermic smelting furnace 1. The raw materials are supplied from a bin 2 through charging chutes to the surface of the molten bath in the smelting furnace 1. The raw materials are supplied preferably in the form of agglomerates with a maximum size of about 25mm.

The smelting furnace 1 can be of any conventional type, but it is preferred to utilise an electrothermic smelting furnace with circular section equipped with three carbon electrodes 4. (Only one electrode 4 is shown in Figures I and 2). The furnace bottom is preferably lined with refractory magnesite bricks. As the refractory bottom lining in the smelting furnace will always be covered by the molten bath, it will practically not be worn at all and no maintenance of the bottom lining is required. The sidewalls in the smelting furnace are preferably built up from convection-cooled panels in which a liquid non-explosive cooling medium is circulated. During operation of such a smelting furnace a permanent layer of solidified slag will be formed on the inside of the convection cooling panels which will protect the panels. The layer of solidified slag will totally eliminate maintenance of the convection cooling panels and in addition also allow recovery of heat energy which is lost through the side walls.

The electrodes are inserted through the furnace cover in an absolutely gastight way so that leakage of gas from the furnace, as well as penetration of air into the furnace, will not occur.

In the smelting furnace 1, the supplied raw materials are smelted at a temperature of 1300°C. By controlling the supply of the reducing agent and the $SiO_2$-sand, there will be formed in the smelting furnace 1 an inert slag phase and a metal phase containing iron, copper and nickel together with minor amounts of other metals which are present in the EAF-dust. Easily reducible and volatile elements, primarily zinc, lead and cadmium will be reduced and volatilised. Possible chlorides which are present will also be expelled. Possible sulphur components and fluorides in the dust will also be partly expelled. The gas will also contain an amount of an entrained and unreacted dust.

An inert slag phase can be tapped out from the smelting furnace 1, which after for instance granulating and cooling, can be deposited without any danger that some of the elements or components in the slag will be leached. Furthermore, there can from time to time be tapped a metallic phase containing iron, copper, nickel and minor amounts of other metals. This metal phase can either be deposited or sold before recovery of the metal values. The slag phase and the metal phase are tapped through two different tapping holes 12 and 13.

Some lead oxide will be reduced in the smelting furnace and gradually accumulate as a metallic lead phase in the bottom of the furnace. This lead phase can from time to time be drained off from the furnace bottom through a separate tapping spout (not shown in the drawings).

The gases which are formed in the smelting furnace contain CO-gas, which is evolved by selective reduction in the smelting furnace, metal fumes, sulphur, chlorine and fluorine components together with possible entrained and unreacted dust.

The gases which are evolved in the smelting furnace are piped out from the furnace through a gas pipe 5 and piped to an after burner 6 in which the metal fumes (for instance zinc fumes) are oxidised (to zinc oxide), and in which the CO-content of the gas is combusted to $CO_2$ and the sulphur oxidised to $SO_2$. The gases are subsequently cooled in a gas cooler 7 whereupon they are piped to a bag filter-house 8 in which solid particles are precipitated from the gas. The solid particles which are precipitated may contain up to 90% ZnO and can be further processed to pure zinc oxide according to known technology.

If the gases contain significant amounts of sulphur, chlorine and/or flourine components these can be removed from the gas in a known way by means of a wet scrubbing step 9, before the remaining gas is let out into the atmosphere and the washing liquid is neutralised.

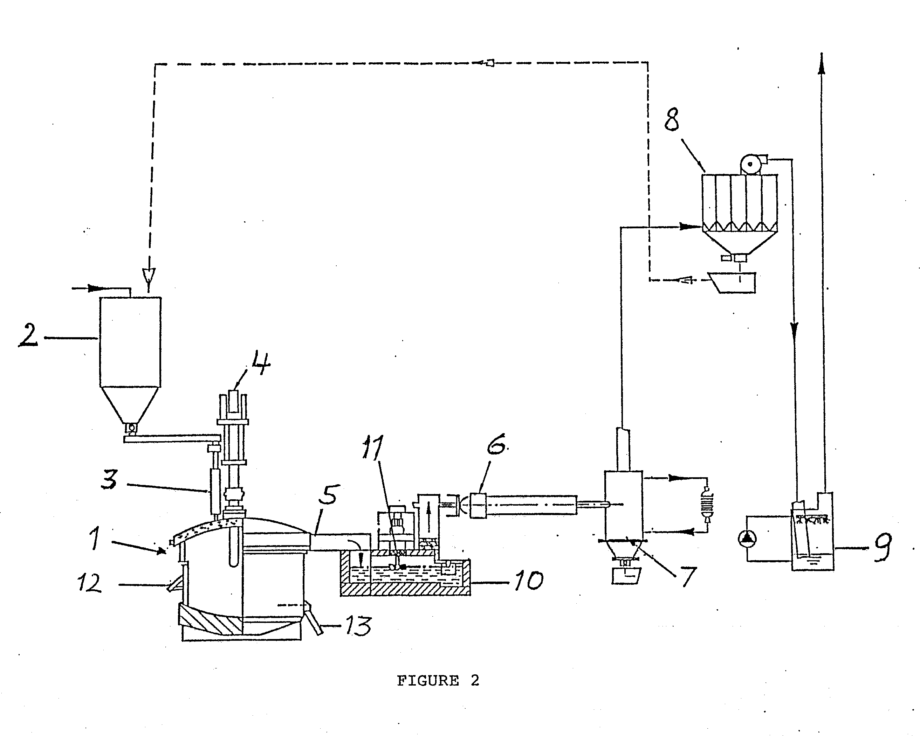

The embodiment of the invention which is illustrated in the flow-diagram of Figure 2 differs from that of Figure 1 only in the fact that an additional step for the selective condensation of metal fumes contained in the gases from the smelting furnace is included in front of the after-combustion step (after burner 6). Steps in Figure 2 which correspond to steps in Figure 1 are indicated by the same reference numerals.

As indicated in Figure 2, the waste gas from the smelting furnace 1 is piped to a condensation step in which the metal fumes in the waste gas are selectively condensed in one or more condensers 10. In Figure 2 only one condenser 10 is shown. As zinc fumes usually constitute the dominating amount of metal fumes in the waste gases, the condensation step 10 will be described below in connection with condensation of zinc.

The zinc condenser 10 is of conventional type with lead or zinc as the condensing medium. The waste gases are led through a batch of molten lead or zinc which is agitated by means of a mechanical agitator 11. The bath is maintained at a temperature between 500 and 700°C. By contact with the melt the zinc fumes in the gases will be condensed and accumulated in the zinc bath. The zinc is removed continuously by overflow from the condenser 10.

Minor amounts of zinc chloride, cadmium chloride and lead chloride which may be present in the waste gas will also be condensed in the zinc condenser 10. Unreacted dust will also be deposited in the condenser. As the density of these components is substantially lower than that of metallic zinc or lead, the condensates of zinc chloride, cadmium chloride, lead chloride and unreacted dust will be collected as a dross on the top of the molten bath in the condenser. This dross can be removed from the bath at intervals and either sold or returned to the smelting.

The remaining gas which leaves the condenser will have a temperature of about 700°C. This gas is piped to the after burner 6 and further treated as described above in connection with Figure 1. Using the method of Figure 2, the amount of dust which is removed from the bag filter will of course be considerably lower than the amount according to the method of Figure 1.

The dust which is removed from the bag filter can be returned to the smelting furnace either continuously or accumulated for batchwise addition to the furnace.

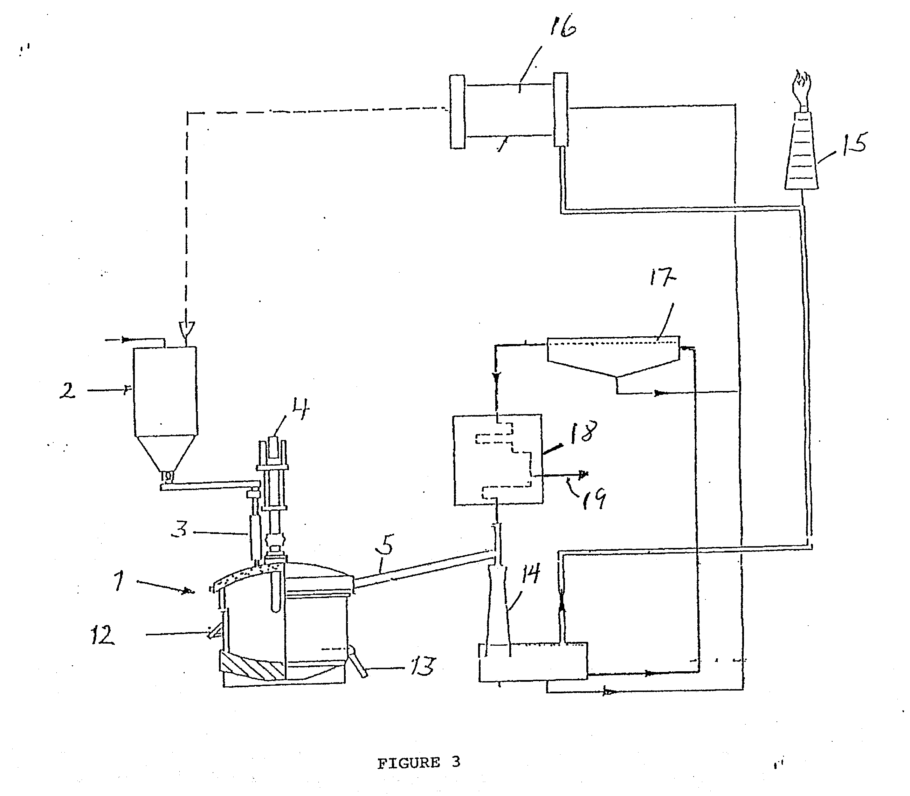

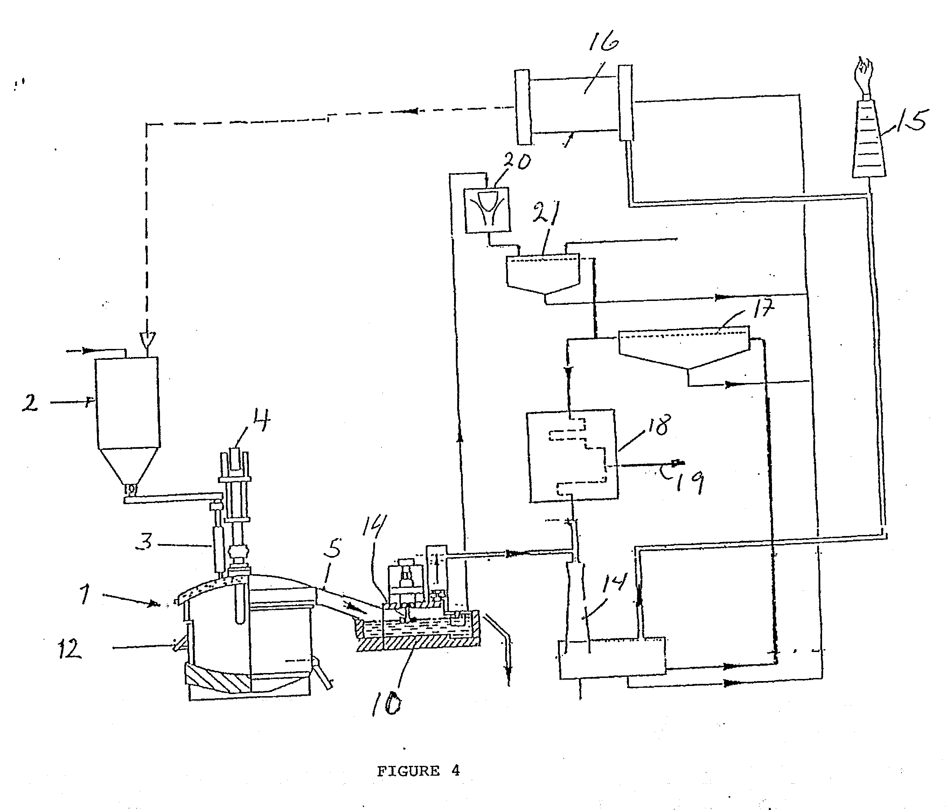

Embodiments of the present invention employing a wet cleaning of the waste gases from the smelting furnace will now be described with reference to Figures 3 and 4. This may be particularly suitable in systems where the chloride content of the waste gases are high.

Figure 3 is a schematic diagram of the present invention without a zinc condenser and with a wet cleaning of the waste gases.

In this embodiment, the waste gases evolved in the smelting furnace 1 are piped out from the furnace through a pipe 5 and directly to a wet gas cleaning apparatus 14, preferably a venturi scrubber. In the wet gas cleaning apparatus 14, the dust contained in the gas will be transferred to a water phase and water soluble chloride compounds in the dust will be dissolved in the water. The cleaned waste gas leaving the venturi scrubber is conducted to a flare stack 15 to combust residual carbon monoxide contained in the gas. The flare stack 15 is provided with a natural gas booster flame to ensure complete and continuous oxidation of all combustible components in the gas. Flared exhaust will be continuously monitored for oxygen and carbon monoxide content.

A part of the dust collected in the wet gas cleaning apparatus 14 is discharged as a sludge and is, preferably after filtering, transferred to a drying apparatus 16, for example a rotary kiln, where the sludge is dried. The dried sludge is preferably returned to the smelting furnace, but can also be disposed of. A part of the cleaned off-gas from the wet gas cleaning apparatus 15 can be used as an energy source in the drying apparatus 16.

The liquid from the wet gas cleaning apparatus 15 which still contains part of the dust is pumped to a clarifier or thickener 17 for partial dewatering of the solids. The clarifier bottom out flow containing the solids is, preferably after filtering, combined with the sludge from the wet gas cleaning apparatus 14.

The overflow from the clarifier 17 which comprises water containing dissolved chlorides is piped to a combined water cooling and water cleaning apparatus 18. In the water cooling and water cleaning apparatus 18, the water is cooled and a bleed stream is treated to remove chlorides by known techniques. The bleed stream is discharged as indicated by reference numeral 19. The rest of the water cooled in the water cooling and water cleaning apparatus 18 is returned to the wet gas cleaning apparatus 14.

In the embodiment of the invention shown in Figure 3, the chloride content in the dust entrained by the waste gas from the smelting furnace is effectively removed and the dust can be recirculated to the smelting furnace. Thus, no chloride will build up in the system even if all the dust is recirculated to the smelting furnace.

Figure 4 is a schematic diagram of the present invention with zinc condenser and with wet cleaning of the waste gases from the smelting furnace.

In this embodiment, a zinc condenser 10 is included between the pipe 5 and the wet gas cleaning apparatus 14, (as with the embodiment of Figure 2). The wet gas cleaning of the embodiment of Figure 4 is identical to that of the embodiment of Figure 3. However, as described in connection with the embodiment of Figure 2, minor amounts of zinc chloride, cadmium chloride, lead chloride and other chlorides which are contained in the waste gas will be condensed in the zinc condenser and together with unreacted dust, form a dross floating on the top of the zinc bath.

According to the embodiment shown in Figure 4, this dross is removed from the condenser and crushed in a crusher 20 and thereafter washed with water in a washing apparatus 21. In the washing apparatus 21 the chloride content of the dross is dissolved in the water. The bottom outflow from the apparatus 21 containing the washed solid is, preferably after filtering, combined with the sludge from the wet gas cleaning apparatus 14 and from the thickener 17. The solids from the apparatus 21 will contain very little in the way of chlorides and can be returned to the smelting furnace together with the other solids removed from the waste gas.

The overflow from the apparatus 21 is combined with the overflow from the thickener 17 and returned to the wet gas cleaning apparatus 14 after cooling and cleaning.

The invention will now be further illustrated in the following specific example.

EXAMPLE

EAF dust with the composition of dust C in Table 1 was treated accoridng to the method described in connection with Figure 1.

The dust was previously pelletised together with $SiO_2$-sand as a flux together with coke as a reduction agent in a quantity necessary for reducing $Fe_2O_3$ to $FeO$, $ZnO$ to $Zn$ and $PbO$ to $Pb$. The pellets were supplied continuously to the smelting furnace and smelted at a temperature of about $1300°C$. An inert slag phase and a metal phase were tapped from the smelting furnace. Dust was recovered from the bag filter and from the gas scrubber.

Table 2 shows the distribution of the elements in the dust as contained respectively in slag phase, metal phase and dust recovered from the bag filter or scrubber.

Table 2 shows that 99% of the zinc in the EAF dust had been recovered in the bag house. Table 2 further shows that the main quantity of Fe, Cr, Mo, Mn, Ca, Mg, Al, F and Si is present in the inert slag phase. Some Fe and the majority of Cu and Ni together with minor amounts of other metals are found in the metallic phase.

## TABLE 2

| Element | weight % of total in slag | weight % of total in metal phase | weight % of total in dust |
|---|---|---|---|
| Fe | 89 | 10 | 1 |
| Zn | 1 | -- | 99 |
| Pb* | 1 | -- | 70 |
| Cd | 5 | -- | 95 |
| Cr | 96 | 4 | -- |
| Mo | 65 | 20 | 15 |
| Cu | 8 | 92 | -- |
| Ni | 30 | 70 | -- |
| As | 50 | 5 | 45 |
| Bi | 50 | 30 | 20 |
| Mn | 88 | 10 | 2 |
| Ca | 99 | 1 | -- |
| Mg | 99 | 1 | -- |
| Al | 99 | 1 | -- |
| Na | 50 | -- | 50 |
| Si | 99 | 1 | -- |
| S | 20 | -- | 80 |
| Cl | 5 | -- | 95 |
| F | 70 | -- | 30 |
| K | 20 | -- | 80 |

* The remaining amount of lead, 29%, was accumulated in a separate lead phase at the bottom of the furnace.

The inert slag produced was leached in accordance with the following procedure.

100 grams of the produced slag was crushed to a particle size of less than 9.5mm whereupon there was added 16 grams of deionised water per gram. The pH was adjusted to 5.0 + 0.2 by addition of 0.5 M acetic acid. The pH-value must be further adjusted by the addition of more acetic acid if the pH-value exceeds 5.2. After 24 hours leaching, deionised water was added according the the equation $V = 20 \times W - 16 \times W - A$, where

$V$ = volume of deionised water in ml
$W$ = weighed amount of solid material in g
$A$ = volume of 0.5m acetic acid in ml.

When the water had been added, the sample was filtrated and the filtrate analysed.

The results are shown in Table 3. In this table the limit values specified by the environmental protection authorities in USA (EPA) are also indicated.

## TABLE 3

### Result of leaching tests

| | present application mg/l | EPA limit values mg/l |
|---|---|---|
| As | <0.1 | 5.0 |
| Ba | 1.3 | 100.0 |
| Cd | <0.05 | 1.0 |
| Cr | <0.05 | 5.0 |
| Pb | <0.1 | 5.0 |

The results in Table 3 show that the slag which has been produced in accordance with the described embodiment of the present invention fully satisfies the conditions specified by the environmental protection authorities in the United States of America.

Even though the present application chiefly describes the invention in connection with EAF dust, it is within the scope of the invention to treat any dust precipitated from the gas generated by metallurgical processes. As examples of other types of dust which can be treated according to the method of the invention, there may be mentioned BOF-dust (Basic Oxygen Furnaces), AOD-dust (Argon Oxygen Degassing), Siemens-Martin dust, dust from the production of ferroalloys, dust from copper smelting processes and other processes.

**Claims**

1. A method for treating dust precipitated from waste gases from metallurgical processes, which comprises: supplying the dust together with reducing agent and optionally a flux or fluxes substantially continuously to a gastight covered electrothermic smelting furnace (1); smelting and selectively reducing metal containing compounds and volatilising volatile metals in the smelting furnace (1); continuously or intermittently tapping an inert slag phase (12) and optionally a liquid metal phase (13) from the smelting furnace; continuously removing from the smelting furnace a gas phase (5) containing chiefly CO-gas, metal fumes, sulphur, chlorides and fluorides together with entrained unreacted dust; optionally selectively condensing (10) one or more metals from the metal fumes in the waste gas from the smelting furnace; removing dust (8) from the waste gas; and optionally finally purifying and neutralising (9) the waste gas.

2. A method as claimed in Claim 1, characterised by the step of conducting a controlled after burning (6) of oxydisable components in the waste gas, prior to removing the dust.

3. A method as claimed in Claim 1 or Claim 2 characterised in that the dust is removed from the waste gas in bag filters.

4. A method as claimed in Claim 3 characterised in that the dust removed is recycled to the smelting furnace.

5. A method as claimed in Claim 1 characterised in that the dust is removed by a wet-cleaning process.

6. A method as claimed in Claim 5 characterised in that the dust is removed as a sludge which is dried and recycled to the smelting furnace.

7. A method as claimed in any preceding claim characterised in that $SiO_2$-sand is used as flux.

8. A method as claimed in any preceding claim characterised in that dust, reducing agent and flux are added to the smelting furnace in the form of agglomerates.

9. A method as claimed in any preceding claim characterised in that the temperature in the smelting furnace is maintained between 1250 and 1750 °C.

10. A method as claimed in Claim 9 characterised in that the temperature in the smelting furnace is maintained between 1300 and 1400°C.

11. A method as claimed in any preceding claim characterised in that zinc is recovered from the off gases from the furnace by selective condensation in a zinc condenser (10) with lead or zinc as a condensing medium.

12. A method as claimed in any preceding claim characterised in that final purification of the waste gas is carried out in a wet gas scrubber (9) with simultaneous removal of sulphur, fluorine and chlorine components from the waste gas.

13. A method as claimed in Claim 1 characterised in that other metal containing wastes or off-grade metal containing materials are added to the dust in order to increase the amount of recoverable metals in the material supplied to the smelting furnace.

FIGURE 1

0285458

FIGURE 2

FIGURE 3

0285458

FIGURE 4